# EUROPEAN PATENT APPLICATION

(11) **EP 3 476 773 A1**
(43) Date of publication of application: **01.05.2019**
(21) Application number: 18202298.8
(22) Date of filing: 24.10.2018
(51) Int. Cl.: B65G 19/02, B65G 54/02

(54) **CART FOR A CONVEYING DEVICE AND CONVEYING DEVICE HAVING A CART**

(30) Priority: 31.10.2017 EP 17199434
(71) Applicant: Tetra Laval Holdings & Finance S.A., 1009 Pully (CH)
(72) Inventor: MARINO, Alessandro, 40051 Malalbergo (IT); BORGHI, Davide, 41121 Modena (IT); ROSSI, Stefano, 42123 Reggio Emilia (IT); SACCHETTI, Elena, 42015 Correggio (IT); VIOLA, Massimo, 41054 Marano sul Panaro (IT); CATELLANI, Andrea, 41124 Modena (IT); CAPELLI, Luca, 42017 Novellara (IT); RIMONDI, Fabrizio, 40024 Bologna (IT); ZUCCOTTI, Alessandro, 41124 Modena (IT)
(74) Representative: Tetra Pak - Patent Attorneys SE

(57) **Abstract**

There is described a cart (3) for cooperating with a track of a conveying device (1). The cart (3) comprises an interaction unit (16) adapted to interact with a drive unit (4) of the conveying device (1) and an engagement unit (17) adapted to cooperate with the track (2). The engagement unit (17) comprises at least a first wheel element (18) adapted to engage a first guiding surface (5) of the track (2) and at least a second wheel element (19) adapted to engage a second guiding surface (6) of the track (2) different from the first guiding surface (5). The cart (3) also comprises a suspension assembly (21) coupled to the first wheel element (18) and/or the second wheel element (19) and being configured to allow for a relative movement between the first wheel element (18) and the second wheel element (19).

## Description

### TECHNICAL FIELD

The present invention relates to a cart for a conveying device, in particular a linear motor conveying device.

The present invention also relates to a conveying device, in particular a linear motor conveying device, having at least one cart moveable along a path, in particular an endless path. Preferentially, the present invention relates to a conveying device, in particular a linear motor conveying device, having a plurality of carts, being independently moveable from each other along a path, in particular an endless path.

### BACKGROUND ART

In the recent years, linear motor conveying devices have gained importance in packaging machines as they permit a significant increase in the flexibility of operation of packaging machines, in particular for handling and/or treating packages.

Linear motor conveying devices typically comprise a track, in particular an endless track and a plurality of movable carts coupled to the track and configured to advance independently from one another along a path defined by the track itself.

A typical cart comprises at least a first wheel element or a group of first wheel elements engaging a first guiding surface of the track and at least a second wheel element or a group of second wheel elements engaging a second guiding surface of the track opposite to the first guiding surface. Thus, in use, the first wheel element(s) run(s) over the first guiding surface and the second wheel element(s) run(s) over the second guiding surface.

Typically, the linear motor conveying device also comprises a drive unit having a plurality of coil assemblies for controlling the advancement of the carts along the track. Furthermore, each cart comprises a respective interaction unit, typically having at least one magnetic or ferromagnetic element, cooperating with the drive unit.

The coil assemblies are controlled in such a manner to selectively and, in particular independently from the other movable carts, advance each movable cart along the track. This allows to e.g. vary the speed, within certain limits, of each movable cart independently from the speed of the other movable carts.

Commonly, each cart carries at least one operative unit for performing an operation on e.g. a package. As the carts are advanced along the track independently from each other, also each operative unit is advanced independently from the other operative units.

The interaction between the track and the carts results in a few drawbacks. It is known, that during the use of the conveying device contaminations deposit on the track, the track is subject to heating up, in use, resulting in a thermal dilatation of the track, dimensional tolerances related to the manufacturing process of the track are typically present and the track is subject to changes due to wear. All these aspects result independently from one another and/or in combination with one another in variations of the profile of the track. This means that, in use, the interaction between the first wheel elements and the second wheel elements is subject to variations (the forces acting on the first wheel elements and the second wheel elements vary in dependence of the portion of the track).

A drawback also resides in that in some instances the amount of contaminations present on the track is such that operation of the linear motor conveying device must be interrupted in order to perform a maintenance work for removing the contaminations.

A further drawback is that the placement of the carts onto the endless track requires to loosen the respective first wheel elements and/or the respective second wheel elements prior to approaching the carts onto the track and to fasten the loosened first wheel element(s) and/or second wheel element(s) again after the engagement of the respective first wheel elements and the respective second wheel elements with the track.

### DISCLOSURE OF INVENTION

It is therefore an object of the present invention to provide a cart for a conveying device to overcome, in a straightforward and low-cost manner, at least one of the aforementioned drawbacks.

In particular, it is an object of the present invention to provide a cart, which is less prone to experience, in use, variations of the interaction with the track and which can be easily connected to a track of a conveying device.

It is a further object of the present invention to provide a conveying device to overcome, in a straightforward and low-cost manner, at least one of the aforementioned drawbacks.

According to the present invention, there is provided a cart as claimed in claim 1.

Preferred embodiments of the present invention are claimed in the dependent claims.

### BRIEF DESCRIPTION OF THE DRAWINGS

Two non-limiting embodiments of the present invention will be described by way of example with reference to the accompanying drawings, in which:
Figure 1 is a perspective view of a conveying device with a cart according to a first embodiment of the present invention, with parts removed for clarity;
Figure 2 is a sectionized view of the conveying device of Figure 1, with parts removed for clarity;
Figure 3 is a perspective view of the cart shown in Figures 1 and 2, with parts removed for clarity;
Figure 4 is a front view of the cart of Figure 3, with parts removed for clarity;
Figure 5 is a perspective view of a cart according to a second embodiment according to the present invention, with parts removed for clarity; and
Figure 6 is a partially sectionized view of the cart of Figure 5, with parts removed for clarity.

### BEST MODES FOR CARRYING OUT THE INVENTION

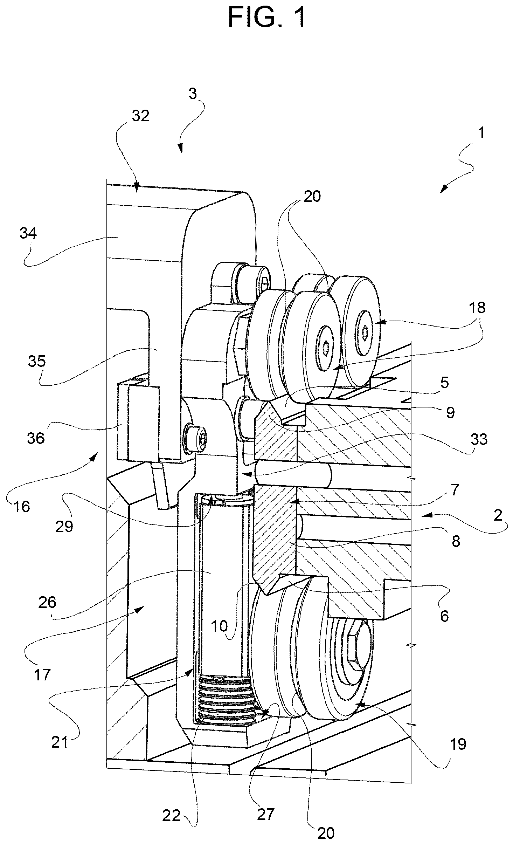

Number 1 in Figure 1 illustrates as a whole a conveying device, in particular a linear motor conveying device, even more particular an endless linear motor conveying device, preferentially for a packaging machine.

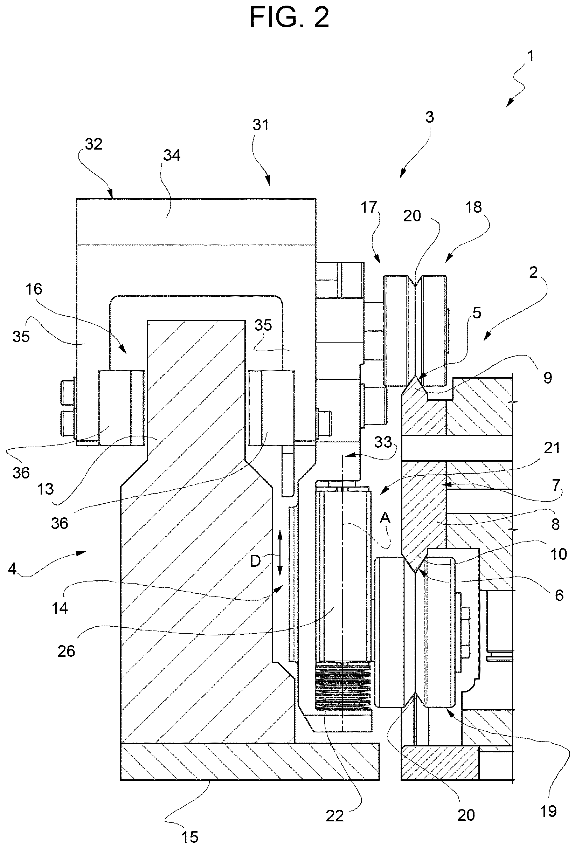

With particular reference to Figures 1 and 2, conveying device 1 comprises:
- at least one track, in particular one endless track 2;
- at least one cart 3, preferentially a plurality of carts 3 (only one shown in Figures 1 and 2) moveably engaged to track 2; and
- at least one drive unit 4 for interacting with cart(s) 3 and for controlling advancement of cart(s) 3 along a path, in particular an endless path (not shown), defined by track 2.

More specifically, track 2 comprises a first guiding surface 5 and a second guiding surface 6 for cooperation with cart(s) 3. In the particular example shown in Figures 1 and 2, guiding surface 5 and guiding surface 6 are opposite to one another.

Even more specifically, track 2 comprises a rail 7, in particular an endless rail 7, interacting with cart(s) 3. More precisely, cart(s) 3 is/are moveable engaged to rail 7.

More specifically, rail 7 comprises guiding surface 5 and guiding surface 6.

Preferentially, rail 7 comprises
- a base portion 8;
- a first protrusion portion 9 connected to and protruding away from base portion 8 and carrying guiding surface 5; and
- a second protrusion portion 10 connected to and protruding away from base portion 8 and carrying guiding surface 6.

Preferentially, protrusion portion 9 and protrusion portion 10 have substantially V-shaped (trapezoidal) cross-sectional profiles.

In a preferred embodiment (not specifically shown), track 2, in particular rail 7, has a substantially oval shape.

In another preferred embodiment (not specifically shown), track 2, in particular rail 7, has a substantially circular shape.

In another preferred embodiment (not specifically shown), track 2, in particular rail 7, comprises a plurality of linear portions and a plurality of curved portions.

With particular reference to Figures 1 and 2, drive unit 4 comprises an actuation assembly 13, in particular extending parallel to track 2, and comprising a plurality of coil assemblies (not shown) adapted to selectively generate an electromagnetic field for interacting with cart(s) 3, in particular for controlling advancement of cart(s) 3 along track 2 (or in other words, along the path defined by track 2).

Preferably, in the specific case of conveying device 1 having a plurality of carts 3, drive unit 4, in particular actuation assembly 13, is adapted to control, at least within certain limits, advancement of carts 3 along the path independently from one another. The coil assemblies are controlled in such a manner to selectively and, in particular independently from the other movable carts, advance each movable cart along track 2, in particular along rail 7. In particular, drive unit 4, in particular actuation assembly 13, is configured to control the speed and/or position, within certain limits, of each cart 3 independently from the speed of the other carts 3.

Even more particular, the coil assemblies are selectively controlled in such a manner that each cart 3 advances independently from the other carts 3 along the path.

Preferentially, drive unit 4, in particular actuation assembly 13, is spaced apart from and faces track 2, in particular leaving a gap 14 between actuation assembly 13 and track 2.

Preferably, conveying device 1 also comprises a support structure 15 for carrying drive unit 4 and track 2.

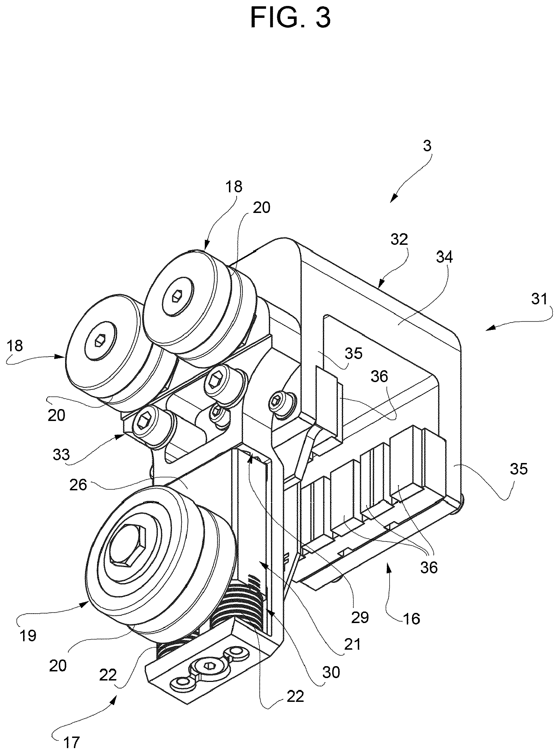

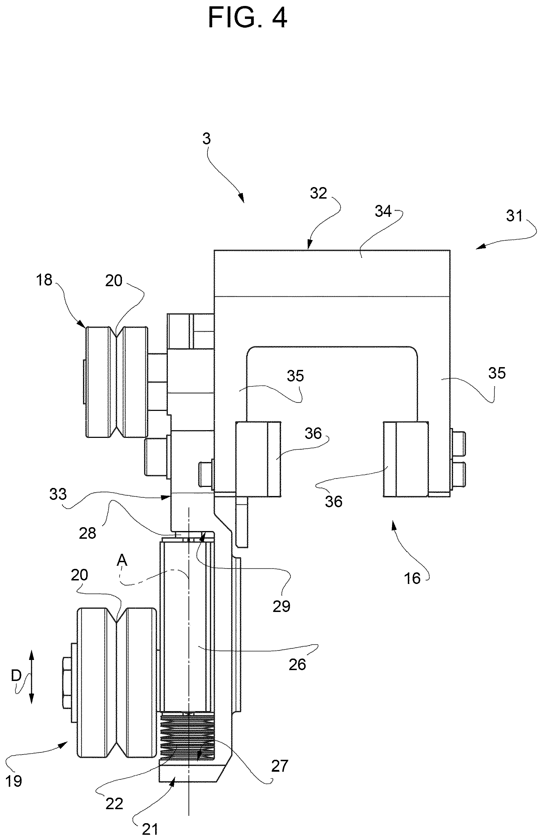

With particular reference to Figures 1 to 4, each cart 3 comprises:
- an interaction unit 16 adapted to interact with drive unit 4, in particular actuation assembly 13, even more particular with the electromagnetic fields selectively generated by the coil assemblies, for controlling advancement of cart 3 along track 2 and/or the path; and
- an engagement unit 17 adapted to cooperate, in particular to engage, with track 2, in particular at least with guiding surface 5 and guiding surface 6.

Advantageously, each engagement unit 17 comprises:
- at least a first wheel element 18 adapted to engage guiding surface 5 and, in particular, being adapted to rotate around a respective central axis; and
- at least a wheel element 19 adapted to engage guiding surface 6 and, in particular, being adapted to rotate around a respective central axis.

Preferentially, wheel element 18 and wheel element 19 are spaced apart from one another. Even more preferentially, wheel element 18 and wheel element 19 are spaced away from one another in a manner that the distance between wheel element 18 and wheel element 19 is variable.

Preferentially, each engagement unit 17 comprises a plurality of wheel elements 18 and/or a plurality of wheel elements 19 for interacting respectively with guiding surface 5 and guiding surface 6.

Preferably, a section of track 2, in particular a section of rail 7, is sandwiched (clamped) between wheel element(s) 18 and wheel element(s) 19 (with the respective cart 3 engaging with track 2, in particular rail 7).

In the specific example shown in Figures 1 to 4, each engagement unit 17 comprises two wheel elements 18 and one wheel element 19.

More specifically, wheel elements 18 and wheel element 19 are arranged in a V-like configuration (i.e. when considering the respective centers of wheel elements 18 and wheel element 19 and drawing imaginary lines between the respective centers of wheel elements 18 and the center of wheel element 19 result in an imaginary V).

Preferentially, each wheel element 18 and each wheel element 19 comprises an annular groove 20, in particular a central annular groove, adapted to interact with respectively protrusion portion 9 and protrusion portion 10.

Preferably, wheel element(s) 18 is/are adapted to run, in use, over guiding surface 5 and wheel element(s) 19 is/are adapted to run, in use, over guiding surface 6.

Advantageously, each engagement unit 17 also comprises a suspension assembly 21 coupled to wheel element(s) 18 and/or wheel element(s) 19.

In the particular example shown, each suspension assembly 21 is coupled to the respective wheel element 19.

Advantageously, each suspension assembly 21 is configured to allow for a relative movement between the respective wheel element(s) 18 and the respective wheel element (s) 19, in particular towards or away from one another.

In other words, each suspension assembly 21 is configured to allow for approaching or withdrawing the respective wheel element(s) 18 and the respective wheel element(s) 19 to or from one another.

In even other words, each suspension assembly 21 is configured to allow for a variation of the distance between wheel element(s) 18 and wheel element(s) 19.

In particular, each suspension assembly 21 is configured to allow for a relative movement between the respective wheel element(s) 18 and the respective wheel element (s) 19 towards or away from one another in use and when the respective cart 3 is coupled to track 2.

On the one side, the presence of the respective suspension assembly 21 allows to easily couple the respective cart 3 to endless track 2, in particular rail 7, and on the other side, the respective suspension assembly 21 allows that, in use, the distance between wheel element(s) 18 and wheel element(s) 19 is adapted to fluctuate in dependence of the surface profile of guiding surface 5 and guiding surface 6 (which may be subject to imperfections due manufacturing tolerances and/or subject to imperfections due to the presence of deposited contaminations and/or thermal dilatation and/or wear).

In particular, each suspension assembly 21 is also configured such that, in particular by exerting the required force, the respective wheel element(s) 18 and the respective wheel element(s) 19 securely engage with respectively guiding surface 5 and guiding surface 6, even more particular such that wheel element (s) 18 and wheel element(s) 19 engage with respectively guiding surface 5 and guiding surface 6 independently of the profile of guiding surface 5 and guiding surface 6.

Preferentially, each wheel element 18 and/or each wheel element 19 is adapted to move along a respective displacement direction D.

In the specific example shown in Figures 1 to 4, each wheel element 19 is connected to the respective suspension assembly 21 in such a manner to be moveable with respect to the respective wheel element(s) 18, in particular along the respective displacement direction D.

More specifically, each wheel element 19 is moveable, in particular along the respective displacement direction D, towards or away from the respective wheel element(s) 18.

In more detail, each suspension assembly 21 comprises at least one biasing element 22, in particular a spring, exerting directly or indirectly a force onto the respective wheel element(s) 18 and/or the respective wheel element (s) 19 so as to bias wheel element (s) 18 and/or wheel element(s) 19 towards one another, in particular along the respective displacement direction(s) D.

In particular, each biasing element 22 is configured to bias, with the respective cart 2 being mounted to track 2, the respective wheel element(s) 18 and/or the respective wheel element(s) 19 along the respective displacement direction(s) D such that the respective wheel element(s) 18 and the respective wheel element(s) 19 engage with track 2, in particular with rail 7, even more particular with respectively guiding surface 5 and guiding surface 6.

More specifically, each biasing element 22 is configured to exert a force, in particular a force parallel or transversal to the respective displacement direction D, so as to establish engagement, in particular secure engagement, of the respective wheel element(s) 18 and the respective wheel element(s) 19 onto rail 7, in particular respectively guiding surface 5 and guiding surface 6 (with the respective cart 3 being mounted onto track 2). In other words, each biasing element 22 is configured to exert a force so as to clamp rail 7 between the respective wheel element(s) 18 and the respective wheel element(s) 19, in particular with wheel element(s) 18 and wheel element(s) 19 engaging respectively guiding surface 5 and guiding surface 6 at a force determined by the respective biasing element(s) 22, in particular independent of the surface profile of rail 7, in particular, of the respective surface profile of guiding surface 5 and guiding surface 6.

In the case the respective cart 3 is detached from track 2, each biasing element 22 is also configured to direct wheel element(s) 18 and wheel element(s) 19 towards one another so as to position them at a minimum distance (which can be zero).

In the case the respective cart 3 is mounted to track 2, each biasing element 22 is configured to direct wheel element(s) 18 and wheel element(s) 19 towards one another and the distance between wheel element(s) 18 and wheel element(s) 19 is determined by track 2, in particular the local thickness of track 2. In particular, in use, the distance between wheel element(s) 18 and wheel element(s) 19 can vary in dependence of the local properties of track 2, in particular the local properties of rail 7, even more particular the local properties of the surface profile of guiding surface 5 and guiding surface 6.

In the particular example shown in Figures 1 to 4, each biasing element 22 is adapted to indirectly exert a force, in particular a force parallel to the respective displacement direction D, onto the respective wheel element 19 so as to direct the respective wheel element 19 towards the respective wheel elements 18.

In the particular example shown in Figures 1 to 4, each suspension assembly 21 comprises more than one biasing element 22, in particular two biasing elements.

Preferentially, each suspension assembly 21 comprises a block element 26 carrying the respective wheel element(s) 19 and being moveable along a respective (linear) displacement axis A, in particular parallel to the respective displacement direction D. In particular, in the example shown in Figures 1 to 4, the respective displacement axis A defines the respective displacement direction D.

More specifically, each block element 26 interacts, in particular directly interacts with the respective biasing element(s) 22, in particular so as to control position of the respective wheel element(s) 19 along direction D.

Even more specifically, in the case the respective cart is mounted to track 2, each block element 26 interacts with the respective biasing element(s) 22 such that wheel element(s) 18 and wheel element(s) 19 engage with track 2, in particular with rail 7, even more particular with respectively guiding surface 5 and guiding surface 6; and in the alternative case in which the respective cart 3 is detached from track 2 each block element 26 interacts with the respective biasing element(s) 22 such that the distance between wheel element (s) 18 and wheel element (s) 19 is the minimum distance.

Even more specifically, each biasing element 22 is interposed between the respective block element 26 and a respective retaining surface 27 of cart 3. In particular, each biasing element 22 is supported by the respective retaining surface 27 and is configured to exert a force onto the respective block element 26 along a direction away from the respective retaining surface 27, so as to direct the respective block element 26 away from the respective retaining surface 27.

Preferentially, each suspension assembly 21 also comprises at least one guide bar 28, in the particular example shown two guide bars 28, extending through a respective through-hole (not shown) provided within the respective block element 26 for guiding the displacement of the respective block element 26 along the respective displacement axis A.

Preferably, each guide bar 28 is coaxial to the respective biasing element 21, even more preferably each guide bar 28 extends through a passage of the respective biasing element 21.

Preferably, each guide bar 28 is at one end supported by, in particular connected to, the respective retaining surface 27, and, in particular, is connected at the other end to a delimiting surface 29 of cart 3. In particular, each block element 26 is moveable between the respective retaining surface 27 and the respective delimiting surface 29.

With particular reference to Figures 1 to 4, each suspension assembly 21 is placed (housed) within a respective recess 30 of the respective cart 3.

Preferentially, each recess 30 carries, in particular comprises, the respective retaining surface 27, and, in particular also the respective delimiting surface 29.

Preferably, each recess 30 comprises two respective free lateral portions (i.e. there are no lateral surfaces limiting recess 30).

With particular reference to Figures 1 to 4, each cart 3 comprises a support platform 31 carrying the respective engagement unit 17 and, preferentially also the respective interaction unit 16.

In more detail, each support platform 31 carries the respective suspension assembly 21 and the respective wheel element(s) 18.

Preferentially, each support platform 31 carries, in particular comprises, the respective recess 30.

In more detail, each support platform 31 comprises a head portion 32 carrying the respective interaction unit 16 and a lateral portion 33 carrying the respective engagement unit 17 and being coupled to the respective head portion 32.

In the example shown in Figures 1 to 4, the respective lateral portion 33 is fixed to the respective head portion 32.

In an alternative configuration, the respective lateral portion 33 and the respective head portion 32 could be integral (substantially a single piece).

In particular, with the respective cart 3 being coupled to track 2 the respective lateral portion 32 extends at least partially within gap 14. Thus, in use, at least a section of each lateral portion 32 advances within gap 14.

In further detail, each lateral portion 33 carries, in particular comprises, the respective recess 30.

Preferentially, each lateral portion 33 has a substantial plate-configuration.

In particular, each head portion 32 substantially has a C-shaped configuration (C-shaped cross-section).

With the respective cart 3 being moveably coupled to track 2, in particular rail 7, the respective head portion 32 at least partially surrounds driving unit 4, in particular actuation assembly 13.

Even more particular, each head portion 32 comprises a base plate 34 and two transversal plates 35 transversally extending from base plate 34. In particular, with the respective cart 3 being coupled to track 2, in particular to rail 7, a section of drive unit 4, in particular actuation assembly 13, is interposed between the respective transversal plates 35.

Preferably, each interaction unit 16 comprises at least one, preferably a plurality, of magnetic or ferromagnetic elements 36 adapted to interact with drive unit 4, in particular actuation assembly 13, even more particular with the electromagnetic field selectively generated by the coil elements.

Preferentially, each element 36 is arranged on the respective support platform 31, in particular the respective head portion 32, even more particular at one of the respective transversal plates 35.

Preferentially, with the respective cart 3 being coupled to endless track 2, at least a section of actuation assembly 13 is interposed between the respective elements 36.

In a preferred embodiment not specifically shown, each cart 3 also comprises an operative unit (not shown) adapted to perform a treatment operation within a packaging machine, in particular on a package. Such a treatment operation can be the application of a closure onto a container or the sealing of a container or the cutting of a packaging material or the handling of a container or the filling of a container, just to name a few examples.

Thus, in such a preferred embodiment the respective operative units are adapted to advance along a respective path through advancement of the respective cart 3 along the respective path.

Prior to operation of conveying device 1 at least one cart 3, preferably a plurality of carts 3, is/are coupled to track 2, in particular rail 7.

In particular, each cart 3 is arranged such that wheel element(s) 18 and wheel element(s) 19 engage respectively guiding surface 5 and guiding surface 6. In other words, wheel element(s) 18 and wheel element(s) 19 are arranged such that a section of track 2, in particular of rail 7, is interposed between wheel element(s) 18 and wheel element(s) 19.

In more detail, during the placement of each cart 3 the respective wheel element(s) 18 and wheel element(s) 19 are distanced from one another (are withdrawn from one another), particular by counter-acting against the force applied by the respective suspension assembly 21, in particular the respective biasing element(s) 22, so that rail 7 can be interposed between the respective wheel element(s) 18 and wheel element(s) 19.

After mounting each cart 3 on track 2, in particular rail 7, the respective suspension assembly 21, in particular the respective biasing element(s) 22, ensure close engagement of the respective wheel element(s) 18 and the respective wheel element(s) 19 with guiding surface 5 and guiding surface 6, respectively.

Overall, the placement of each cart 3 does not require any further screwing operations and the respective biasing element(s) 22 apply the needed force to securely fasten the respective cart 3 on track 2, in particular rail 7.

During operation of conveying device 1, each cart 3 advances along track 2, in particular rail 7. In particular, each cart 3, in particular the respective interaction unit 16, even more particular the respective element 36, interact(s) with drive unit 4, in particular with actuation assembly 13, even more particular with the electromagnetic fields selectively generated by the coil elements so as to advance in a controlled manner.

Furthermore, each cart 3 advances independently, at least within certain limits, from the other carts 3.

During advancement of each cart 3, the respective suspension assembly 21 permits relative movements of wheel element(s) 18 and wheel element(s) 19 with respect to one another. In particular, each suspension assembly 21 allows movement of the respective wheel element(s) 19 along the respective displacement direction D towards or away from the respective wheel element(s) 18.

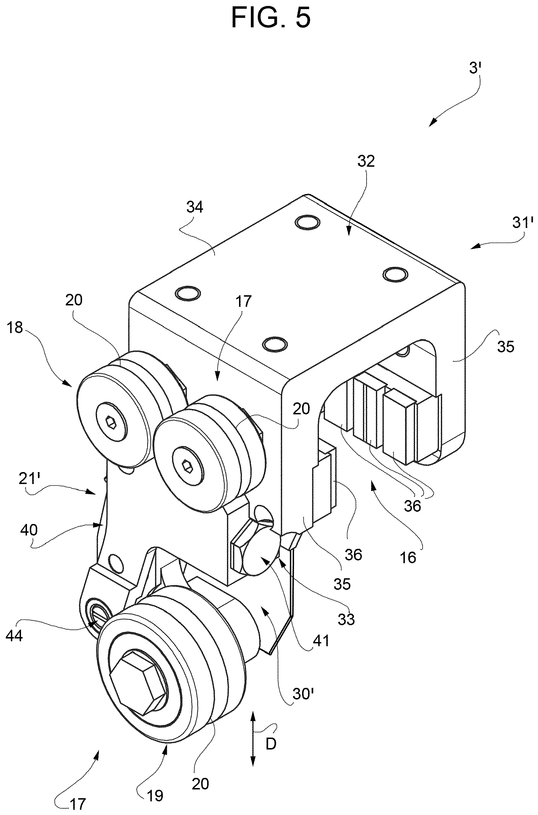

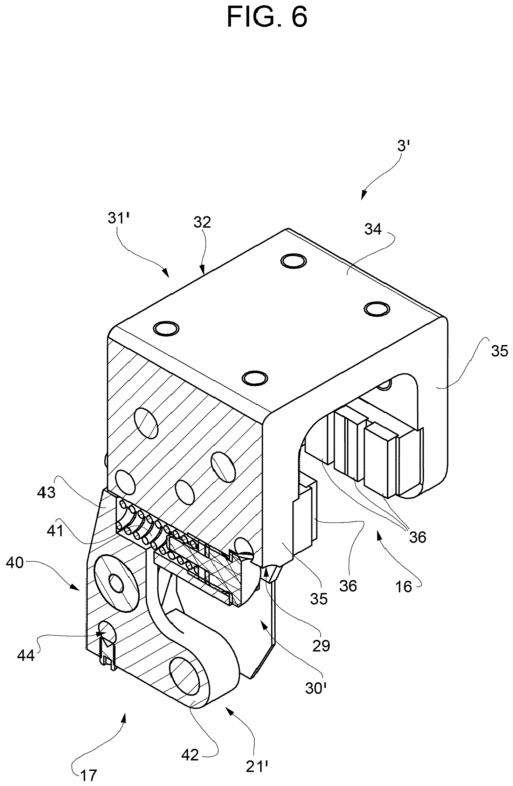

With reference to Figures 5 and 6, number 3' indicates a second embodiment of a cart according to the present invention of conveying device 1; as cart 3' is similar to cart 3, the following description is limited to the differences between them, and using the same references, where possible, for identical or corresponding parts.

In particular, cart 3' differs from cart 3 in comprising suspension assembly 21'.

In the example shown in Figures 5 and 6, cart 3' also differs from cart 3 in comprising recess 30'; and in comprising support platform 31'.

Support platform 31' differs from support platform 31 in being designed as a single piece. In other words, the respective head portion 32 and the respective lateral portion 33 are integral to one another.

Recess 30' differs from recess 30 in being open to one face end; i.e. recess 30' does not comprise a retaining surface 27. More specifically, recess 30' comprises one closed face portion (defined by the respective delimiting surface 29) and one free face portion (there is no limiting surface). Preferably, recess 30' also comprises two free lateral portions (there are no laterally delimiting surfaces).

Preferentially, suspension assembly 21' comprises at least one lever arm 40 pivotally mounted to cart 3', in particular the respective support platform 31' and carrying the respective wheel element(s) 19 and at least one biasing element 41, in particular a spring, for angularly controlling lever arm 40 for moving the first wheel element (18) and the second wheel element (19) with respect to one another.

More specifically, in the case that the respective cart 3' is mounted to track 2, the respective biasing element 41 exerts a force on lever arm 40 so as to ensure that wheel element(s) 18 and wheel element(s) 19 engage with track 2, in particular respectively with guiding surface 5 and guiding surface 6.

In more detail, each lever arm 40 carries the respective wheel element(s) 19 at a first end portion 42 of lever arm 40 and the respective biasing element 41 interacts with lever arm 40 at a second end portion 43 of lever arm 4 opposite to the respective end portion 42.

Preferentially, each lever arm 40 also comprises a pivot station 44 arranged between the respective end portion 42 and the respective end portion 43 and at which lever arm 40 is pivotally mounted to the respective support platform 31'.

More specifically, each lever arm 40 is angularly moveable around a rotation axis normal to lever arm 40 at pivot station 44.

In more detail, each lever arm 40 comprises at least a first linear section carrying end portion 42 and at least a second linear section carrying end portion 43 and being connected to the respective first linear section. In particular, each lever arm 40 has a substantially L-like shape.

Preferentially, the respective pivot station 44 is arranged in the area of the conjunction of the respective first linear section and the respective second linear section.

Preferably, each lever arm 40 is arranged within the respective recess 30' such that pivot station 44 and delimiting surface 29 are arranged at opposite sides of recess 30'.

Furthermore, each biasing element 41 is configured to exert a force transversal, in particular substantially perpendicular, to the respective displacement direction D.

Preferably, each biasing element 41 extends parallel to and in the proximity of the respective delimiting surface 29. In other words, each biasing element 41 is mounted to the respective support platform 31' such that biasing element 41 is parallel to the respective delimiting surface 29.

The advantages of cart 3 and cart 3' according to the present invention will be clear from the foregoing description.

In particular, by providing for respectively suspension assembly 21 and suspension assembly 21' each cart 3 and cart 3' is reactive with respect to the surface profile of track 2, in particular rail 7, even more particular the respective surface profiles of guiding surface 5 and guiding surface 6. Suspension assembly 21 and suspension assembly 21' allow that possible thermal dilatations and/or imperfections due to the construction of track 2, in particular rail 7, and/or variations of track 2, in particular rail 7, due to wear and/or any contaminations present on guiding surface 5 or guiding surface 6 are, in use, automatically compensated for.

Furthermore, by providing carts 3 and carts 3' with respectively a respective suspension assembly 21 and a respective suspension assembly 21' the lifetime of carts 3 and carts 3' is increased with respect to the ones lacking a respective suspension assembly 21 or a respective suspension assembly 21'.

Another advantage is that the accuracy of the operation of carts 3 and carts 3' is increased as the respective suspension assembly 21 or the respective suspension assembly 21'guarantee a smooth advancement of carts 3 and carts 3' along track 2.

A further advantage resides in the fact that the presence of contaminations on guiding surface 5 and guiding surface 6 does not require interruption of operation of conveying device 1.

An additional advantage is that cart 3 and cart 3' can be easily attached to and removed from track 2, in particular rail 7, as respectively suspension assembly 21 and suspension assembly 21' provide for flexibility with respect to the relative distance between wheel element (s) 18 and wheel element (s) 19 so as to adopt to the profile of track 2.

Clearly, changes may be made to cart 3 or cart 3' or conveying device 1 as described herein without, however, departing from the scope of protection as defined in the accompanying claims.

In an alternative embodiment not shown, conveying device 1 comprises a second (endless) track, in particular parallel to track 2, and at least one further cart, preferentially a plurality of further carts, for cooperation with the second track (the further cart is coupled to the second track, in particular the respective rail).

In particular, the further cart(s) is/are constructed according to cart 3 or cart 3'.

Preferably, the further cart(s) is/are coupled to one respective cart 3 or cart 3'.

Even more preferably, the further cart(s) is/are coupled to the respective cart 3 or cart 3' such that operation of the respective operative unit is controlled by the cooperation of the further cart(s) and the respective cart 3 or cart 3'.

In a further alternative embodiment not shown, track 2 comprises rail 7 and a further rail parallel to rail 7 and each cart 3 or cart 3' comprises engagement unit 17 for engaging with rail 7 and a further engagement unit similar to engagement unit 17 for engaging with the further rail.

In an even other alternative embodiment not shown, wheel element(s) 18 and wheel element(s) 19 are inclined with respect to one another.

## Claims

1. Cart (3, 3') for cooperating with a track of a conveying device (1), the cart (3, 3') comprises:
- an interaction unit (16) adapted to interact with a drive unit (4) of the conveying device (1); and
- an engagement unit (17) adapted to cooperate with the track (2);
wherein the engagement unit (17) comprises:
- at least a first wheel element (18) adapted to engage a first guiding surface (5) of the track (2); and
- at least a second wheel element (19) adapted to engage a second guiding surface (6) of the track (2) different from the first guiding surface (5);
the cart (3, 3') being **characterized in** further comprising a suspension assembly (21, 21') coupled to the first wheel element (18) and/or the second wheel element (19);
wherein the suspension assembly (21, 21') is configured to allow for a relative movement between the first wheel element (18) and the second wheel element (19) .

2. The cart according to claim 1, wherein the suspension assembly (21, 21') is configured to allow for a relative movement between the first wheel element (18) and the second wheel element (19) towards or away from one another.

3. The cart according to claim 1 or 2, wherein the suspension assembly (21, 21') comprises at least one biasing element (22, 41) exerting a force onto the first wheel element (18) and/or the second wheel element (19) so as to bias the first wheel element (18) and/or the second wheel element (19) towards one another.

4. The cart according to claim 3, wherein the first wheel element (18) and/or the second wheel element (19) is/are adapted to move along a respective displacement direction (D); and wherein the biasing element (21, 41) is a spring element exerting a force along a direction parallel or transversal to the respective displacement direction (D).

5. The cart according to any one of the preceding claims, and further comprising a support platform (31, 31') carrying the suspension assembly (21, 21') and the first wheel element (18); and
wherein the second wheel element (19) is connected to the suspension assembly (21, 21') and is moveable with respect to the first wheel element (18).

6. The cart according to any one of the preceding claims, wherein the suspension assembly (21) comprises:
- a block element (26) moveable along a respective displacement axis (A) and carrying the second wheel element (19); and
- at least one biasing element (22) interposed between the block element (22) and a retaining surface (27) of the cart (3) and configured to direct the block element (26) away from the retaining surface (27).

7. The cart according to claim 6, wherein the suspension assembly (21) also comprises at least one guide bar (28) extending through a respective through-hole provided within the block element (26) for guiding the displacement of the block element (26) along the respective displacement axis (A);
wherein the guide bar (28) is supported at one end by the retaining surface (27).

8. The cart according to claim 5, wherein the suspension assembly (21') comprises at least one lever arm (40) pivotally mounted to the support platform (31') and carrying the second wheel element (19) and at least one biasing element (41) for angularly controlling the lever arm (40) for moving the first wheel element (18) and the second wheel element (19) with respect to one another.

9. The cart according to claim 8, wherein the lever arm (40) carries the second wheel element (19) at a first end portion (42) of the lever arm (40) and the biasing element (41) interacts with the lever arm (40) at a second end portion (43) of the lever arm (40) opposite to the first end portion (42);
wherein the lever arm (40) comprises a pivot station (44) arranged between the first end portion (42) and the second end portion (43) at which the lever arm (40) is pivotally mounted to the support platform (31').

10. The cart according to any one of claims 6 to 9 when depending on claim 5, wherein the support platform (31, 31') comprises a recess (30, 30') for housing the suspension assembly (21, 21').

11. The cart according to any one of the preceding claims, and further comprising an operative unit adapted to execute a treatment operation.

12. The cart according to any one of the preceding claims, wherein the interaction unit (16) comprises at least one magnetic or ferromagnetic element (36) adapted to interact with the drive unit (4) of the conveying device (1).

13. A conveying device (1) comprising:
- at least one track;
- at least one cart (3, 3') according to any one of the preceding claims moveably engaged to the track (2); and
- at least one drive unit (4) for interacting with the interaction unit (17) of the cart (3, 3') and for controlling advancement of the cart (3, 3') along a path defined by the track (2).

14. The conveying device according to claim 13, wherein the drive unit (4) comprises an actuation assembly (13) extending parallel to the track (2) and comprising a plurality of coil assemblies adapted to selectively generate an electromagnetic field for controlling advancement of the cart (3, 3').

15. The conveying device according to claim 13 or claim 14 comprising a plurality of carts (3, 3') moveably engaged to the track (2) and being adapted to advance along the path independently from each other.
